# EUROPÄISCHE PATENTSCHRIFT

(11) **EP 3 746 683 B1**
(45) Veröffentlichungstag und Bekanntmachung des Hinweises auf die Patenterteilung: **20.04.2022**
(21) Anmeldenummer: 19701515.9
(22) Anmeldetag: 23.01.2019
(51) Int. Cl.: F16J 15/16, F16J 15/34

(54) **AXIAL-WELLENDICHTRING UND DICHTUNGSANORDNUNG**
AXIAL SHAFT SEALING RING AND SEAL ARRANGEMENT
BAGUE À LÈVRE AVEC RESSORT AXIALE ET ARRANGEMENT D'ÉTANCHÉITÉ

(30) Priorität: 29.01.2018 DE 102018201291
(43) Veröffentlichungstag der Anmeldung: 09.12.2020
(73) Patentinhaber: Trelleborg Sealing Solutions Germany GmbH, 70565 Stuttgart (DE)
(72) Erfinder: FRANZ, Martin, 72827 Wannweil (DE); WEHMANN, Christoph, 70597 Stuttgart (DE); SCHÜLE, Christoph, 71032 Böbblingen (DE)
(74) Vertreter: Kohler Schmid Möbus Patentanwälte
(86) Internationale Anmeldenummer: PCT/EP2019/051594
(87) Internationale Veröffentlichungsnummer: WO 2019/145344

(56) Entgegenhaltungen:
- DE-U1- 9 201 556
- GB-A- 2 369 412
- US-A1- 2003 006 563

## Beschreibung

Die Erfindung betrifft einen Axial-Wellendichtring und eine Dichtungsanordnung mit einem solchen Axial-Wellendichtring.

Axial-Wellendichtringe (AWDR) werden in der Praxis in der Regel für untergeordnete Dichtungsaufgaben eingesetzt. So dienen Axial-Wellendichtringe häufig einem Staub- oder Spritzwasserschutz. Im Gegensatz zu den sogenannten Radial-Wellendichtringen (RWDR) liegt der dynamische Dichtabschnitt des Axial-Wellendichtrings nicht an der Welle, sondern üblicherweise an einem Gehäuseteil in einer zur Mittelachse des Dichtrings axialen Richtung dichtend an.

Bekannte Bauformen sind der sogenannte V-Ring und der Gammaring, welcher zusätzlich noch eine Labyrinth Funktion ausübt.

Bei Drehzahlen von bis zu 40.000 U/min, wie diese beispielsweise von den Antriebswellen heutiger Elektromotoren, beispielsweise bei Kraftfahrzeugen oder Werkzeugmaschinen, ohne weiteres erreicht werden können, unterliegen die Axial-Wellendichtringe einer enormen mechanischen und thermischen Belastung. Dies kann die Lebensdauer der Wellendichtringe maßgeblich verkürzen.

Ein Axial-Wellendichtring aus dem Stand der Technik ist z.B. aus der GB 2 369 412 bekannt, die den Oberbegriff des Anspruchs 1 offenbart. In dieser Druckschrift wird ein Dichtungselement unter Zentrifugalwirkung von einer Dichtungsfläche gelöst, wodurch Verschleiß und Wärmeentwicklung reduziert werden.

Es ist deshalb die Aufgabe der Erfindung, einen Axial-Wellendichtring sowie eine Dichtungsanordnung mit einem solchen Axial-Wellendichtring anzugeben, die selbst bei den genannten großen Drehzahlen eine verbesserte Lebensdauer aufweisen, und wobei das Material des Dichtabschnitts vorrangig in Abhängigkeit von den jeweiligen Dichtungsanforderungen ausgewählt werden kann.

Die den Axial-Wellendichtring betreffende Aufgabe wird durch einen Axial-Wellendichtring mit den in Anspruch 1 angegebenen Merkmalen gelöst. Die erfindungsgemäße Dichtungsanordnung ist in Anspruch 14 angegeben. Bevorzugte Weiterbildungen der Erfindung sind Gegenstand der Unteransprüche sowie der Beschreibung.

Der erfindungsgemäße Axial-Wellendichtring weist einen Halteabschnitt auf, der auf einer um eine Drehachse rotierbaren Welle statisch dichtend anordenbar ist. Ein Dichtabschnitt des Axial-Wellendichtrings dient der dynamisch dichtenden Anlage an einer Dichtfläche in einer zur Mittelachse des Axial-Wellendichtrings axialen Richtung. Der Axial-Wellendichtring umgreift die Mittelachse ringförmig, sodass die Mittelachse des Axial-Wellendichtrings im auf der Welle montierten Zustand des Axial-Wellendichtrings mit deren Drehachse zusammenfällt. Der Halteabschnitt und der Dichtabschnitt sind über eine elastisch verformbare Dichtungsmembran miteinander verbunden, die sich vom Halteabschnitt in radialer Richtung nach außen zum Dichtabschnitt hin wegerstreckt. Der Dichtabschnitt ist durch die Dichtungsmembran im auf der Welle montierten Zustand des Axial-Wellendichtrings mit einer Anpresskraft F_{A} gegen die Dichtfläche vorspannbar. Die Dichtungsmembran dient im montierten Zustand des Axial-Wellendichtrings somit als ein Vorspannelement für den Dichtabschnitt. Erfindungsgemäß weist die Dichtungsmembran in Umfangsrichtung des Wellendichtrings mehrere Raumstrukturbereiche auf, die als eine Umfangsreserve der Dichtungsmembran dienen. Durch eine mit einer Rotationsbewegung des Wellendichtrings um seine Mittelachse einhergehende und an der Dichtungsmembran angreifende Zentrifugalkraft ist erfindungsgemäß zumindest in den Raumstrukturbereichen der Dichtungsmembran eine Aufweitung der Dichtungsmembran in einer radialen Richtung relativ zum Dichtabschnitt bewirkt, derart, dass der Dichtabschnitt durch die Dichtungsmembran mit einer axial gerichteten Zugkraft Fz beaufschlagbar ist. Der dynamisch dichtende Dichtabschnitt des Axial-Wellendichtrings kann dadurch in Abhängigkeit von einer jeweiligen Drehzahl des Axial-Wellendichtrings um seine Mittelachse, d. h. drehzahlabhängig, entlastet werden. Je nach Auslegung des Axial-Wellendichtrings kann der Dichtabschnitt sogar von der jeweilig zugeordneten Dichtfläche abgelöst, d. h. in axialer Richtung wegbewegt, werden. Insgesamt kann dadurch eine mechanische und thermische Überbeanspruchung des Dichtabschnitts selbst bei Anwendungsfällen mit extrem großen Drehzahlen der Welle zuverlässig entgegengewirkt werden. Der Dichtabschnitt des erfindungsgemäßen Axial-Wellendichtrings muss sich bei den im Betriebseinsatz des Axial-Wellendichtrings auftretenden Drehzahlen bzw. Umfangsgeschwindigkeiten des Axial-Wellendichtrings nicht selbst verformen bzw. verformen können, sodass das Material des Dichtabschnitts vorrangig in Abhängigkeit von den jeweiligen Dichtungsanforderungen ausgewählt werden kann. Insoweit kann der Dichtabschnitt des Axial-Wellendichtrings ohne Weiteres aus einem zähelastischen Material, z. B. PTFE (Polytetrafluorethylen), oder aus einem im Vergleich zum Dichtungsmembran formstabilen oder im Wesentlichen formstabilen Material, wie etwa Metall oder einer (technischen) Keramik, bestehen. Die Dichtungsmembran kann aus einem zäh- oder gummielastisch verformbaren Material bestehen. Grundsätzlich kommen hier insbesondere die dem Fachmann geläufigen Standardwerkstoffe wie beispielsweise Acrylnitril-Butadien-Kautschuk oder auch Silikon, EPDM (Ethylen-Propylen-Dien-Kautschuk), FKM (Fluor-Carbon-Kautschuk) oder HNBR (hydrierter Acrylnitrilbutadien-Kautschuk) in Frage.

Die als Umfangsreserve dienenden Raumstrukturbereiche der Dichtungsmembran können in Umfangsrichtung des Wellendichtrings, bevorzugt regelmäßig, voneinander beabstandet angeordnet sein oder unmittelbar aneinandergrenzend hintereinanderliegend angeordnet sein. Der erfindungsgemäße Axial-Wellendichtring weist breite Einsatzmöglichkeiten auf und kann insbesondere in der Medizin, in der Verfahrenstechnik, bei Werkzeugmaschinen sowie auch bei mobilen Anwendungen zum Einsatz kommen. Aufgrund seiner ihm innewohnenden drehzahlabhängigen Selbstentlastung des Dichtabschnitts ist der erfindungsgemäße Axial-Wellendichtring dabei für Dichtungsaufgaben bei mit Drehzahlen von bis zu 40.000/min umlaufenden Wellen prädestiniert.

Die Dichtungsmembran kann über Ihre gesamte Erstreckung oder im Wesentlichen über Ihre gesamte Erstreckung eine einheitliche, d. h. gleichmäßige, Wandstärke aufweisen. Dies bietet fertigungstechnische Vorteile.

Nach einer bevorzugten Ausführungsform der Erfindung umfassen die als Umfangsreserve dienenden Raumstrukturbereiche der Dichtungsmembran Membranfalten der Dichtungsmembran. Die Membranfalten sind vorzugsweise axial oder streng axial verlaufend angeordnet. Besteht die Dichtungsmembran aus einem thermoplastischen Material, so können Materialschwächungen, beispielsweise in Form von Einschnürungen im Bereich von Kanten der Dichtungsmembran, die erwünschte zentrifugalkraftinduzierte Verformbarkeit der Dichtungsmembran erleichtern. Dadurch kann die Wandstärke der Dichtungsmembran und somit deren Masse erhöht werden, ohne allzu große Einschränkungen bezüglich deren Verformbarkeit hinnehmen zu müssen.

Die Raumstrukturbereiche der Dichtungsmembran können nach einer bevorzugten Ausführungsform der Erfindung Einbuchtungen und/oder Ausbuchtungen der Dichtungsmembran umfassen. Die Einbuchtungen bzw. Ausbuchtungen können eine polygonale oder eine elliptische, insbesondere ovale, oder eine kreisrunde Grundform ausweisen.

Erfindungsgemäß ist der Dichtabschnitt im Vergleich zur Dichtmembran gegenüber den im Betriebseinsatz des Axial-Wellendichtrings auftretenden Zentrifugalkräften F_{R} (in sich) formstabil ausgeführt oder in seiner Form stabilisiert. Ersteres kann beispielsweise dadurch erreicht werden, dass der Dichtabschnitt aus einem Material mit einem im Vergleich zum Material der Dichtungsmembran großen Elastizitätsmodul besteht.

Zur Formstabilisierung des Dichtabschnitts umfasst der Wellendichtring nach der Erfindung einen Stützring, durch den ein radiales Aufweiten des Dichtabschnitts im Betriebseinsatz des Wellendichtrings begrenzt oder unterbunden ist. Der Dichtabschnitt wird durch den Stützring mit anderen Worten gegenüber einem radialen Aufweiten ausgesteift. Der Stützring kann den Dichtabschnitt erfindungsgemäß in radialer Richtung außenseitig umgreifen. Der Dichtabschitt kann am Stützring angeformt, insbesondere angespritzt, oder festgeklebt sein. Alternativ kann der Dichtabschnitt im Stützring im Preßsitz gehalten angeordnet sein. Besonders bevorzugt sind der Dichtabschnitt und der Stützring als ein Zweikomponenten-Spritzgussteil (2K) ausgeführt. Der Stützring kann aus einem Kunststoffmaterial, aus Metall oder aus einem Verbundmaterial bestehen.

Umgreift der Stützring die Dichtungsmembran des Axial-Wellendichtrings, so kann der Stützring eine Abstütz- bzw. Anschlagsfläche für die Dichtungsmembran ausbilden. Dadurch kann die zentrifugalkraftinduzierte Verformung der Dichtungsmembran in radialer Richtung begrenzt werden. In diesem Fall weist der Stützring somit eine Doppelfunktion auf.

Der Halteabschnitt, die Dichtmembran sowie der Dichtabschnitt des Axial-Wellendichtrings können nach einer bevorzugten Ausführungsform der Erfindung einstückig miteinander ausgebildet sein. Dadurch kann der Axial-Wellendichtring kostengünstig im Wege eines Spritzgussverfahrens erzeugt werden. Dies bietet insbesondere bei der Massenfertigung des Axial-Wellendichtrings Kostenvorteile und ermöglicht insgesamt geringe Fertigungstoleranzen.

Der Dichtabschnitt des Axial-Wellendichtrings kann eine oder mehrere Dichtkanten aufweisen. Dadurch kann das Dichtvermögen des Axial-Wellendichtrings dem Bedarf entsprechend angepasst werden.

Gemäß einer bevorzugten Weiterbildung der Erfindung ist die Dichtungsmembran, bevorzugt in radialer Richtung innenseitig, mit nur einem Masseelement oder mit mehreren ringförmig um die Mittelachse herum angeordneten Masseelementen versehen, durch das/die das radiale Aufweiten der Dichtungsmembran bei einer Rotationsbewegung des Wellendichtrings unterstützt wird. Das eine Masseelement kann nach der Erfindung insbesondere ringförmig ausgeführt sein.

Jedes Masseelement ist vorteilhaft mit der Dichtungsmembran verklebt, verschweißt oder eingepresst. Alternativ kann jedes Masseelement auch außenumfangsseitig an der Dichtungsmembran befestigt, insbesondere festgeklebt sein. Insgesamt kann dadurch das Ansprechverhalten der Dichtungsmembran auf aus der Rotationsbewegung des Axial-Wellendichtrings abgeleitete Zentrifugalkräfte weiter verbessert werden. Die Dichtungsmembran kann dadurch bei Bedarf auch mit einer größeren Wanddicke und/oder aus einem zähelastischerem Material realisiert werden. Alternativ kann die Dichtungsmembran folienartig mit einer sehr kleinen, d. h., mit einer minimierten, Wandstärke realisiert werden.

Der Halteabschnitt des Axial-Wellendichtrings kann für einen zuverlässigen (statischen) Dichtsitz auf der Welle einen Spann- oder Haltering umfassen. Der Haltering kann beispielsweise im Material des Halteabschnitts eingebettet angeordnet oder mit dem Halteabschnitt verklebt sein. Auch kann der Halteabschnitt am Haltering angespritzt sein.

Die erfindungsgemäße Dichtungsanordnung umfasst ein Wellengehäuse und eine Welle, die relativ zum Wellengehäuse um eine Drehachse umlaufend rotierbar ist, sowie einen vorstehend erläuterten Axial-Wellendichtring. Durch den Axial-Wellendichtring ist ein zwischen dem Wellengehäuse und der Welle ausgebildeter Dichtspalt abgedichtet. Der Axial-Wellendichtring ist auf der Welle drehfest montiert und liegt mit seinem Dichtabschnitt an einer Dichtfläche des Wellengehäuses in einer zur Mittelachse des Wellendichtrings axialen Richtung, bevorzugt vorgespannt, dichtend an. Es versteht sich, dass der Axial-Wellendichtring auf der Welle in axialer Richtung lagefixiert gehalten angeordnet ist.

Die Welle kann als eine Motorwelle, insbesondere eines Elektromotors, ausgeführt sein.

Weitere Vorteile der Erfindung ergeben sich aus der Beschreibung und der Zeichnung. Nachstehend wird die Erfindung anhand von in der Zeichnung wiedergegebenen Ausführungsbeispielen näher erläutert. Die gezeigten und beschriebenen Ausführungsformen sind nicht als abschließende Aufzählung zu verstehen, sondern haben vielmehr beispielhaften Charakter für die Schilderung der Erfindung. Der Schutzbereich wird durch die Patentansprüche bestimmt.

In der Zeichnung zeigen:

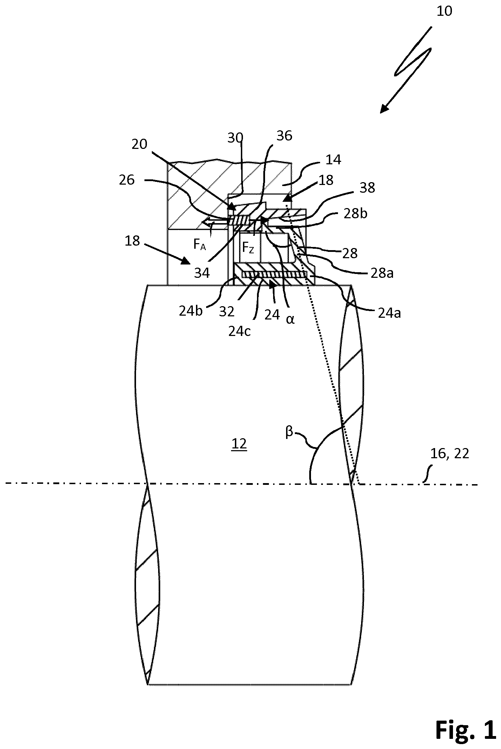

- Fig. 1: eine Dichtungsanordnung mit einer Welle, einem Wellengehäuse und einem Axial-Wellendichtring zum Abdichten eines zwischen der Welle und dem Wellengehäuse ausgebildeten Dichtspalts, wobei der Axial-Wellendichtring einen auf der Welle statisch dichtend angeordneten Halteabschnitt und einen Dichtabschnitt aufweist, der an einer Dichtfläche des Wellengehäuses in axialer Richtung dichtend anliegt und welcher mit dem Halteabschnitt über eine Dichtungsmembran verbunden ist, wobei die Dichtungsmembran durch Zentrifugalkräfte aktivierbar ist und, um den Dichtabschnitt zu entlasten, bei ruhender, d. h. nicht rotierender Welle, in einer ausschnittsweisen Schnittdarstellung;
- Fig. 2: die Dichtungsanordnung gemäß Fig. 1 bei rotierender Welle und durch an der Dichtungsmembran angreifende Zentrifugalkraft aktivierte Dichtungsmembran zur axial gerichteten Entlastung des Dichtabschnitts des Axial-Wellendichtrings relativ zur Dichtfläche, in einer ausschnittsweisen Schnittdarstellung;
- Fig. 3: die Dichtungsanordnung gemäß Fig. 1 bei maximaler Drehzahl der Welle und mit von der Gegenlauffläche in axialer Richtung beabstandetem Dichtabschnitt, was eine Aufhebung der Kraft F_{A} zur Folge hat;
- Fig. 4: eine weitere Dichtungsanordnung, bei der die Dichtungsmembran des Axial-Wellendichtrings in seiner Neutralstellung eine gegenüber der in Fig. 1 gezeigten Dichtungsmembran andere Formgebung aufweist, bei ruhender Welle und in einer ausschnittsweisen Schnittdarstellung;
- Fig. 5: ein Ausführungsbeispiel einer Dichtungsmembran eines Axial-Wellendichtrings gemäß den Figuren 1 bis 4, in einer ausschnittsweisen Seitenansicht;
- Fig. 6: die Dichtungsmembran gemäß Fig. 5 in einer perspektivischen Teilansicht;
- Fig. 7: ein weiteres Ausführungsbeispiel einer Dichtungsmembran eines Axial-Wellendichtrings gemäß den Figuren 1 bis 4, in einer ausschnittsweisen Seitenansicht;
- Fig. 8: die Dichtungsmembran gemäß Fig. 7 in einer weiteren ausschnittsweisen Seitenansicht;
- Fig. 9: die die Dichtungsmembran gemäß Fig. 7 in einer ausschnittsweisen perspektivischen Detaildarstellung;
- Fig. 10: ein weiteres Ausführungsbeispiel einer Dichtungsmembran eines Axial-Wellendichtrings gemäß den Figuren 1 bis 4, in einer ausschnittsweisen perspektivischen Detaildarstellung;
- Fig. 11: ein weiteres Ausführungsbeispiel einer Dichtungsmembran eines Axial-Wellendichtrings gemäß den Figuren 1 bis 4, in einer ausschnittsweisen Seitenansicht
- Fig. 12: die Dichtungsmembran gemäß Fig. 11, in einer ausschnittsweisen Seitenansicht; und
- Fig. 13: eine Dichtungsanordnung, bei der die Dichtungsmembran des Axial-Wellendichtrings an seiner Innenseite mit einem zusätzlichen Masseelement versehen ist, in einer ausschnittsweisen Schnittdarstellung;

**Fig. 1** zeigt eine Dichtungsanordnung **10** mit einer Welle **12** und mit einem hier als Wellengehäuse **14** ausgeführten Maschinenteil. Die Welle 12 ist relativ zum Wellengehäuse 14 um eine mit **16** bezeichnete Drehachse rotierbar. Zwischen der Welle 12 und dem Wellengehäuse 14 ist ein Dichtspalt **18** ausgebildet. Zur Abdichtung des Dichtspalts 18 dient ein Axial-Wellendichtring **20,** dessen Mittelachse **22** mit der Drehachse 16 der Welle 12 zusammenfällt. In Fig. 1 ist der Axial-Wellendichtring 20 bei ruhender bzw. stehender Welle 12 gezeigt.

Der Axial-Wellendichtring 20 weist einen Fuß- oder Halteabschnitt **24** und einen Dichtabschnitt **26** auf, die über eine Dichtungsmembran **28** miteinander verbunden sind.

Der Dichtabschnitt 26 liegt an einer Gegenlauf- oder Dichtfläche **30** des Wellengehäuses 14 in einer zur Drehachse 16 axialen Richtung an. Es versteht sich, dass die Dichtfläche 30 nach einer in der Zeichnung nicht näher wiedergegebenen Ausführungsbeispiel auch an einem zum Wellengehäuse 14 separat ausgebildeten Maschinenteil ausgebildet sein kann.

Der Axial-Wellendichtring 20 ist über den Halteabschnitt 24 auf der Welle 12 drehfest und in axialer Richtung lagefixiert gehalten angeordnet. Demzufolge ist der Axial-Wellendichtring gemeinsam mit der Welle 12 um die Drehachse 16 gegenüber dem Wellengehäuse 14 rotierbar. Der Halteabschnitt 24 des Axial-Wellendichtrings 20 liegt an der Welle 12 statisch dichtend an. Der Halteabschnitt 24 kann mit einem Spann- oder Haltering **32** versehen sein, mittels dessen der Halteabschnitt 24 auf der Welle 12 im radialen Preßsitz gehalten ist. Der Halteabschnitt 24 kann zusätzlich oder alternativ auch in einem axialen Preßsitz auf der Welle 12 gehalten angeordnet sein.

Die Dichtungsmembran 28 ist am Halteabschnitt 24 angeformt und erstreckt sich vom Halteabschnitt 24 in einer zur Mittelachse des Axial-Wellendichtrings 20 radialen Richtung nach außen weg. Die Dichtungsmembran 28 wirkt als ein Federoder Vorspannelement, durch das der Dichtabschnitt 26 mittels einer Anpresskraft **F_{A}** in axialer Richtung gegen die Dichtfläche 30 elastisch vorgespannt ist. Die Dichtungsmembran 28 weist ein halteabschnittsseitiges Membransegment **28a** und ein dichtabschnittsseitiges Membransegment **28b** auf. Die beiden Segmente sind hier gegeneinander abgewinkelt und schließen gemeinsam einen Winkel **α** von hier ungefähr 105° ein. Der Winkel α kann auch größer oder kleiner als 105° sein. Das halteabschnittsseitige Membransegment 28a ist zur Drehachse 16 im Wesentlichen radial verlaufend angeordnet. Das dichtabschnittsseitige Membransegment 28b ist zur Drehachse 16 im Wesentlichen axial verlaufend angeordnet.

Die Dichtungsmembran 28 kann gemäß dem in Fig. 1 gezeigten Ausführungsbeispiel am von der Dichtfläche wegweisenden Endabschnitt **24a** des Halteabschnitts 24 angeformt sein. Dadurch kann bei einer besonders kompakten Baugröße des Axial-Wellendichtrings 20 eine ausreichend große axiale Vorspannung des Dichtabschnitts 26 gegen die Dichtfläche 30 gewährleistet werden. Zu beachten ist jedoch, dass die Dichtungsmembran 28 auch an dem der Dichtfläche 30 zuweisenden Endabschnitt 24b oder in einem zwischen den beiden Endabschnitten 24a, 24b angeordneten Zentralabschnitt 24c des Halteabschnitts 24 angeformt sein kann. Die Dichtungsmembran schließt mit der Drehachse 16 der Welle hier beispielshaft einen Winkel **β** von ungefähr 75° ein.

Der Dichtabschnitt 26 kann an der Dichtungsmembran 28 angeformt sein und mit dieser einstückig ausgebildet sein oder gemäß dem in Fig. 1 gezeigten Ausführungsbeispiel in Form eines zum Dichtungsmembran 28 separates Bauteil ausgeführt sein.

Der ringförmige Dichtabschnitt kann in einer Haltenut **34** eines Stützrings **36** angeordnet sein. Der Stützring 36 besteht dabei aus einem Material, das im Vergleich zum Material der Dichtungsmembran 28 und bevorzugt auch des Dichtabschnitts 26, weniger stark elastisch verformbar ist bzw. formstabil ausgeführt ist. Durch den Stützring 36 kann so einem unerwünschten Aufweiten des Dichtabschnitts 26 des Axial-Wellendichtrings 20 bei rotierender Welle 12 entgegengewirkt werden. Die Dichtungsmembran 28 ist mit anderen Worten durch aus der Rotation der Welle 12 resultierende Zentrifugalkräfte F_{R} stärker in radialer Richtung verformbar, als der Dichtabschnitt 26. Durch die vorgenannte Armierung des Dichtabschnitts 26 kann dieser bedarfsweise aus einem gummielastisch oder einem zähelastisch verformbaren Material bestehen. Als geeignete Materialien kommen insbesondere Polyolefinwerkstoff wie beispielsweise Polytetrafluoräthylen (PTFE), Polyurethan (PU) oder andere dem Fachmann geläufige Dichtungswerkstoffe, wie beispielsweise Metall oder Keramik, in Frage. Der Stützring 36 und der Dichtabschnitt des Axial-Wellendichtrings 20 können beispielsweise im 2-K- Verfahren hergestellt sein. Der Dichtabschnitt 26 kann nach einem in der Zeichnung nicht näher wiedergegebenen Ausführungsbeispiel mit der Dichtungsmembran 28 einstückig ausgeführt sein. Gemäß Fig. 1 kann der Stützring 36 die Dichtungsmembran 28 in einer radialen Richtung umgreifen und eine Anschlag- oder Abstützfläche **38** für die Dichtungsmembran 28 bilden.

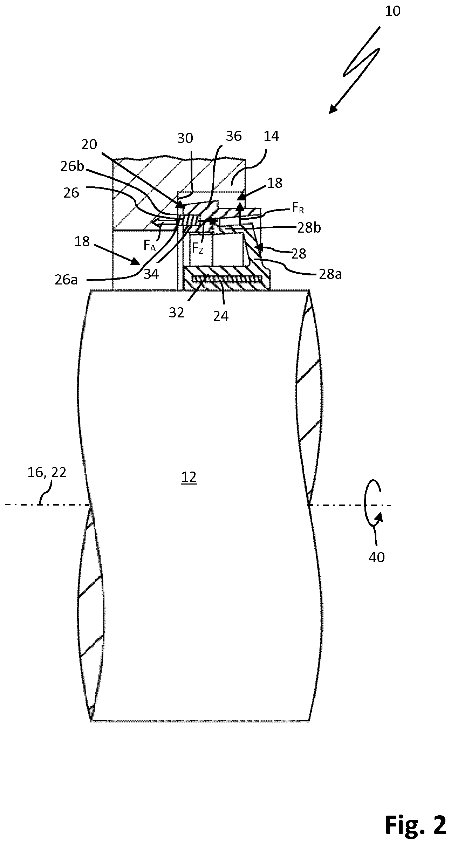

In **Fig. 2** ist die Dichtungsanordnung 10 im Betriebszustand mit rotierender Welle gezeigt. Der Axial-Wellendichtring 20 rotiert relativ zum Wellengehäuse 14 in Richtung einer mit **40** bezeichneten Rotationsrichtung um die Drehachse 16. An der Dichtungsmembran 28 greift eine aus der Rotationsbewegung des Axial-Wellendichtrings 20 abgeleitete Zentrifugalkraft **F_{R}** an. Diese Zentrifugalkraft **F_{R}** bewirkt eine Aufweitung der Dichtungsmembran 28 in einer radialen Richtung. Diese Aufweitung ist durch spezielle Raumstrukturbereiche der Dichtungsmembran 28 unterstützt bzw. ermöglicht, welche als eine Umfangsreserve der Dichtungsmembran 28 fungieren. Auf die genannten Raumstrukturbereiche wird weiter unten im Detail eingegangen.

Der durch den Stützring 36 in radialer Richtung ausgesteifte Dichtabschnitt 26 des Axial-Wellendichtrings 20 kann sich in radialer Richtung nicht oder nur unwesentlich aufweiten. Der Dichtabschnitt 26 und der Stützring 36 werden infolgedessen durch die in radialer Richtung verformte Dichtungsmembran 28 mit einer axial gerichteten Zugkraft **Fz** beaufschlagt. Diese Zugkraft Fz weist von der Dichtfläche 30 weg und ist somit der Anpresskraft **F_{A},** mit der der Dichtabschnitt 26 durch die Dichtungsmembran 28 in axialer Richtung gegen die Dichtfläche 30 gepresst wird, entgegengerichtet. Dadurch wird der an der Dichtfläche 30 dichtend anliegende Dichtabschnitt 26 entlastet. Eine Kontaktflächenpressung zwischen dem Dichtabschnitt 26 und der Dichtfläche 30 wird mithin reduziert.

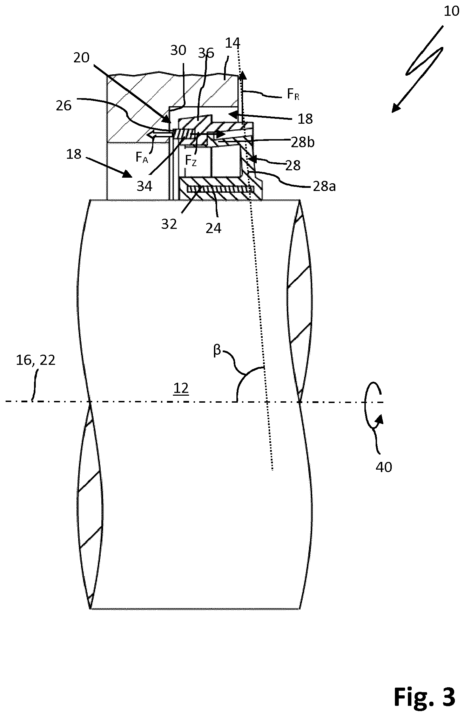

Die Größe der auf die Dichtungsmembran 28 einwirkenden Zentrifugalkraft Fz ist abhängig von der Drehzahl der Welle 12. Steigt die Drehzahl, so vergrößern sich die auf die elastisch verformbare Dichtungsmembran 28 wirkende Zentrifugalkraft F_{R} und damit der Grad der Verformung der Dichtungsmembran 28. Sinkt die Drehzahl, so verringern sich dementsprechend die Zentrifugalkräfte F_{R} und die Dichtungsmembran 28 verformt sich selbsttätig in Richtung auf ihren in Fig. 1 gezeigte Ausgangs- oder Neutralstellung zurück. Insgesamt wird dadurch eine drehzahlabhängige Entlastung des Dichtabschnitts 26 in axialer Richtung erreicht. Dabei ist zu beachten, dass der Dichtabschnitt 26 bei Änderungen der Drehzahl der Welle 12 nicht in einer radialen Richtung an der Dichtfläche 30 entlangbewegt wird. Dadurch wird der Dichtabschnitt 26 bzw. dessen Dichtkanten **26a, 26b** mechanisch weniger stark beansprucht. Im Bedarfsfall kann die Dichtungsmembran 28, insbesondere deren vorgenannte Raumstrukturbereiche, derart ausgelegt sein, dass die Zugkraft Fz die auf den Dichtabschnitt 26 wirkende Anpresskraft F_{A} der Dichtungsmembran 28 bei Erreichen einer vorgegebenen Drehzahl der Welle 12 übersteigt. In diesem Fall wird der Dichtabschnitt 26 von der Dichtfläche 30 in (streng) axialer Richtung wegbewegt. Der Dichtabschnitt 26 des Axial-Wellendichtrings 20 ist mithin bei Erreichen der vorgegebenen Drehzahl der Welle 12 von der Dichtfläche 30 beabstandet angeordnet, wie dies in **Fig. 3** dargestellt ist. Für F_{A} gilt hier F_{A}=0.

Durch den konstruktiven Aufbau des Axial-Wellendichtrings kann somit einer reibungsbedingten mechanischen sowie auch thermischen Überbeanspruchung des Dichtabschnitts 26 zuverlässig entgegengewirkt werden. Der Axial-Wellendichtring 20 kann dadurch selbst bei extrem großen Drehzahlen der Welle 12 von beispielsweise bis zu 40.000/min eingesetzt werden. Aufgrund des Funktionsprinzips des Axial-Wellendichtrings 20 kann die Lebensdauer des Wellendichtrings 20 entscheidend verbessert werden.

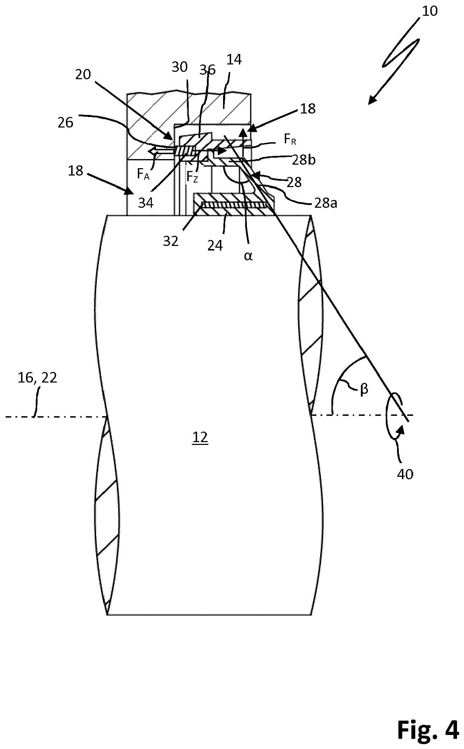

In **Figur 4** ist ein weiteres Ausführungsbeispiel der Dichtungsanordnung 10 gezeigt. Der Axial-Wellendichtring 20 ist hier im ruhenden Betriebszustand der Welle 12, d. h., in seinem Neutralzustand gezeigt. In diesem Betriebszustand schließt die Dichtungsmembran 28 mit der Drehachse 16 einen spitzeren Winkel ß ein, als dies bei der in Fig. 1 gezeigten Dichtungsanordnung 10 der Fall ist. Der Winkel β beträgt hier ungefähr 60°. Der Winkel α beträgt ungefähr 120°.

Die Erstreckung der Dichtungsmembran 28 in radialer Richtung ist kleiner als die Erstreckung der Dichtungsmembran 28 in axialer Richtung. Das Verhältnis der radialen Erstreckung zur axialen Erstreckung der Dichtungsmembran 28 kann insbesondere (ungefähr) 5:7 betragen.

Bei den vorstehend erläuterten Dichtungsanordnungen 10 kann die Dichtungsmembran 28 alternativ auch nach radial außen konvex gebogen ausgeführt sein. In diesem Fall sind die beiden Membransegmente 28a, 28b mithin nicht gegeneinander abgewinkelt. Darüber hinaus können der Dichtabschnitt 26 und die Dichtmembran 28 des Axial-Wellendichtrings 20 einstückig miteinander ausgebildet sein. Der Stützring 36 und der Dichtabschnitt 26 können miteinander verklebt, als 2K-Bauteil oder in anderer Weise aneinander befestigt sein.

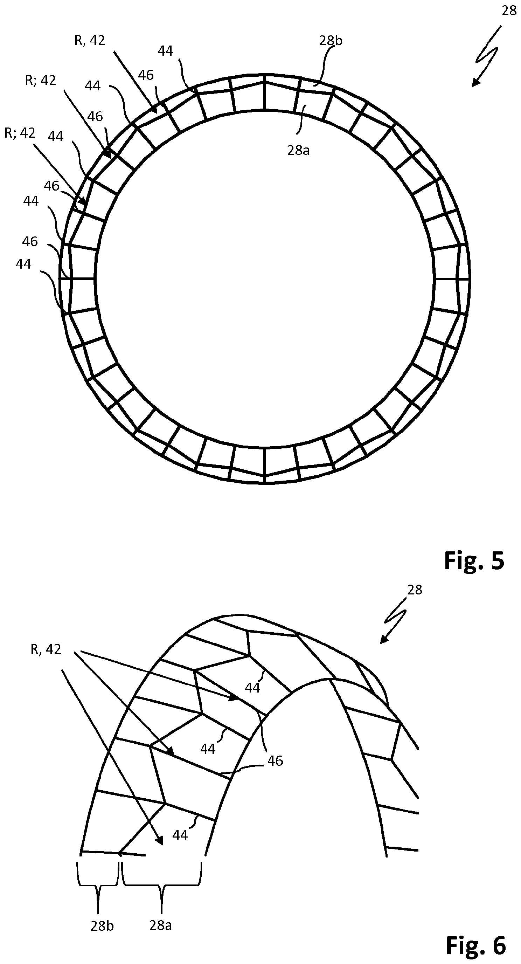

In den **Figuren 5** bis **12** sind verschiedene Ausführungsbeispiele der Dichtungsmembran 28 eines im Zusammenhang mit den Fign. 1 bis 4 gezeigten Axial-Wellendichtrings mit unterschiedlichen Raumstrukturbereichen in einer jeweils ausschnittsweisen und freigestellten Darstellung gezeigt.

In den **Fign. 5** und **6** ist die Dichtungsmembran 28 eines Axial-Wellendichtrings 20 mit ihrem halteabschnittseitigen Membransegment 28a und ihrem dichtabschnittsseitigen Membransegment 28b in einer freigestellten Ansicht gezeigt. Die Raumstrukturbereiche R der Dichtungsmembran 28 gemäß den Fign. 5 und 6 sind in Form von Falten **42** der Dichtungsmembran 28 ausgeführt, die in Umfangsrichtung der Dichtungsmembran 28 hintereinanderliegend angeordnet sind. Diese Art der Faltung der Dichtungsmembran 28 entspricht einer sogenannten Leporello- oder Zickzackfaltung der Dichtungsmembran 28 in Umfangsrichtung. Mit **44** sind erste Membranfalze und mit **46** sind zweite Membranfalze der Dichtungsmembran 28 bezeichnet. Die Membranfalze 44, 46 können sich jeweils über die gesamte oder im Wesentlichen die gesamte Dichtungsmembran 28 erstrecken.

Die ersten Membranfalze 44 des zweiten Membransegments 28b sind in radialer Richtung weiter außenliegend angeordnet, als die zweiten Membranfalze 46. Im Bereich des halteabschnittsseitigen ersten Membransegments 28a sind die ersten Membranfalze 44 vom Dichtabschnitt 26 in axialer Richtung weiter beabstandet, als die zweiten Membranfalze 46.

Durch die Falten 42 der Dichtungsmembran 28 kann sich diese unter dem Einfluss der durch die Rotation der Welle 12 (Fig. 1) bewirkten Zentrifugalkraft F_{R} "entfalten", d. h., in radialer Richtung aufweiten. Aufgrund des dem Material des Dichtungsmembran 28 innenwohnenden elastischen Rückstellvermögens kann sich diese aus ihrem entfalteten Zustand in ihren in den Fign. 5 und 6 gezeigten Neutralzustand (bei ruhender Welle) selbsttätig zurückverformen.

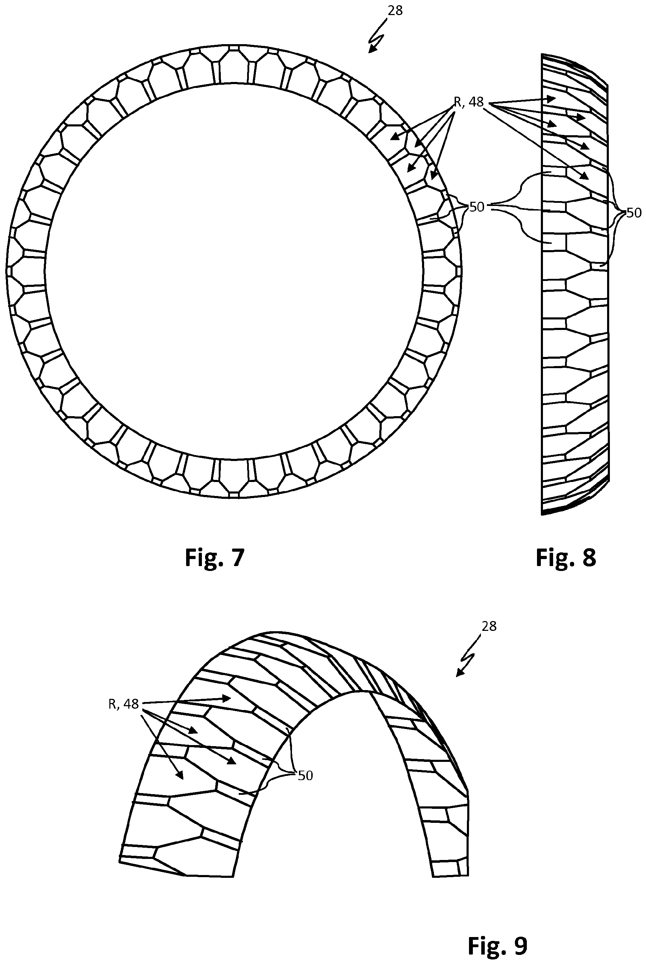

Gemäß der in den **Fign. 7** bis **9** ausschnittsweise gezeigten Dichtungsmembran 28 können die Raumstrukturbereiche R, durch die eine Umfangsreserve der Dichtungsmembran 28 bewirkt ist, eine Vielzahl von muldenförmigen Vertiefungen **48** der Außenseite der Dichtungsmembran 28 umfassen. Die Vertiefungen 48 können jeweils eine polygonale Grundform aufweisen. Zwischen den Vertiefungen 48 können in Umfangsrichtung des Axial-Wellendichtrings 20 jeweils Membranstege **50** angeordnet sein, durch die eine lokal begrenzte Aussteifung der Dichtungsmembran bewirkt ist. Dadurch kann die Dichtungsmembran 28 insbesondere bei ruhender Welle 12 der Dichtungsanordnung 10 (vgl. Fig. 1) in einer vorgegebenen Form stabilisiert werden. Die Vertiefungen 48 der beiden Membransegmente können in Umfangsrichtung des Axial-Wellendichtrings 20 (Fig.1) im Wechsel ineinandergreifen, d. h. miteinander kämmen.

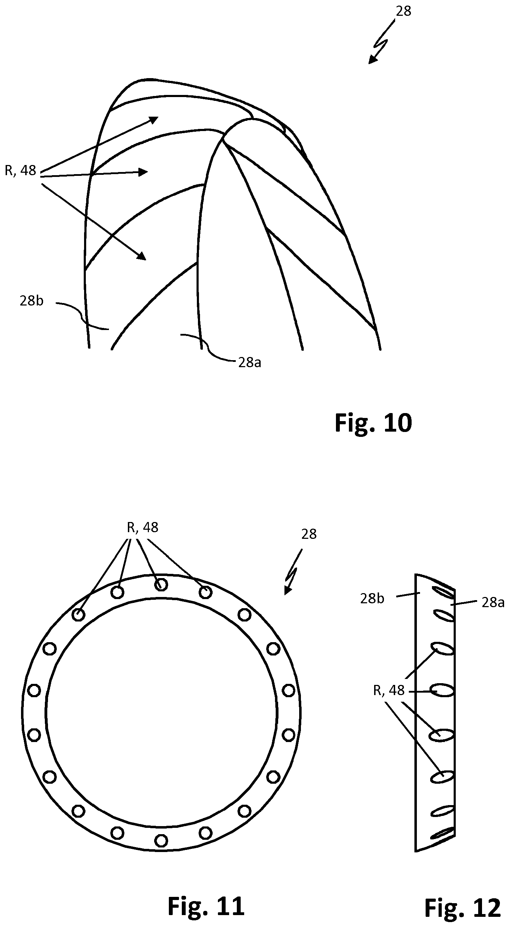

Gemäß der in **Fig. 10** gezeigten Dichtungsmembran 28 können die Vertiefungen 48 der Dichtungsmembran 28 auch jeweils zumindest abschnittsweise spiralförmig ausgeführt sein.

Bei der in den **Fign. 11** und **12** (in Neutralstellung) gezeigten Dichtungsmembran 28 umfassen die Raumstrukturbereiche R einzelne Vertiefungen 48 der Dichtungsmembran 28 mit ovaler, hier elliptischer, Grundform. Die Vertiefungen 48 sind in Umfangsrichtung des Axial-Wellendichtrings 20 (Fig.1), bevorzugt regelmäßig, voneinander beabstandet angeordnet. Die Raumstrukturbereiche R können anstelle der in den Fign. 11 und 12 gezeigten Vertiefungen 48 auch Vorwölbungen oder Ausbuchtungen der Dichtungsmembran 28 umfassen.

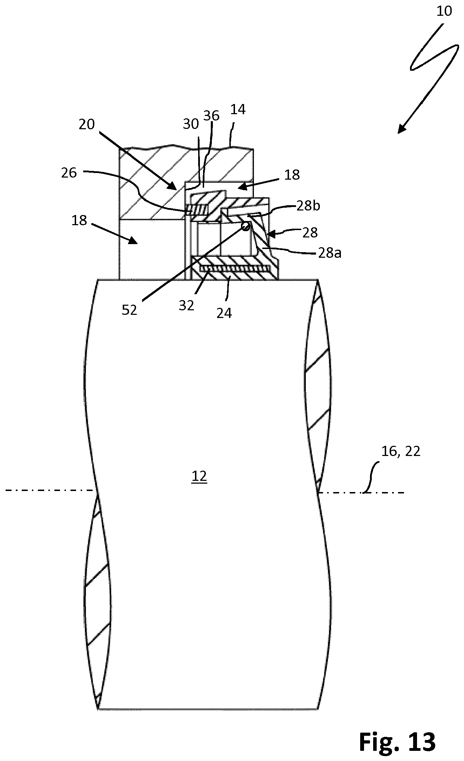

Gemäß der in Fig. 13 gezeigten Ausführung der Dichtungsmembran 28 kann das Ansprechverhalten der Dichtungsmembran 28 auf Drehzahländerungen der Welle 12 durch ein einzelnes Masseelement **52** oder auch durch mehrere Masseelemente 52 weiter verbessert werden, das/die an der Dichtungsmembran 28 angeordnet ist/sind. Das bzw. die Masseelemente 52 können innenseitig oder außenseitig an der Dichtungsmembran 28 befestigt oder zumindest abschnittsweise im Material der Dichtungsmembran 28 eingebettet gehalten angeordnet sein. Das einzelne Masseelement 52 kann beispielsweise ringförmig ausgeführt sein und insbesondere aus einem Elastomer bestehen. Sind mehrere Masseelemente 52 vorgesehen, so können diese aus einem beliebigen Material, insbesondere auch aus Metall bestehen. Die Masseelemente können bei Bedarf durch elastomere Verbindungsteile (nicht gezeigt), die zur Dichtungsmembran 28 separat ausgebildet sind, miteinander mechanisch verkoppelt sein. Durch den Einsatz eines Masseelements 52 bzw. von mehreren Masseelementen 52 kann das Spektrum der für die Dichtungsmembran 28 in Frage kommenden Materialien erweitert und/oder die Dichtungsmembran 28 mit einer veränderten, d. h. kleineren oder größeren, Wandstärke realisiert werden. Dadurch kann insgesamt das mögliche Einsatzspektrum des Axial-Wellendichtrings 20 bzw. der Dichtungsanordnung 10 weiter erweitert werden.

## Patentansprüche

1. Axial-Wellendichtring (20),
mit einem Halteabschnitt (24), der auf einer um eine Drehachse (16) rotierbaren Welle (12) statisch dichtend anordenbar ist und
mit einem Dichtabschnitt (26) zur dynamisch dichtenden Anlage an einer Dichtfläche (30) in einer zur Mittelachse (22) des Axial-Wellendichtrings (20) axialen Richtung, wobei
der Halteabschnitt (24) und der Dichtabschnitt (26) über eine elastisch verformbare Dichtungsmembran (28) miteinander verbunden sind, die sich vom Halteabschnitt (24) in einer radialen Richtung zum Dichtabschnitt (26) hin wegerstreckt, und durch die der Dichtabschnitt (26) mit einer Anpresskraft F_{A} gegen die Dichtfläche (30) vorspannbar ist,
wobei die Dichtungsmembran (28) in Umfangsrichtung des Wellendichtrings (20) mehrere Raumstrukturbereiche R aufweist, die als eine Umfangsreserve der Dichtungsmembran (28) dienen, wobei durch eine mit einer Rotationsbewegung des Wellendichtrings (20) um seine Mittelachse (22) einhergehenden und an der Dichtungsmembran (28) angreifenden Zentrifugalkraft F_{R} in den Raumstrukturbereichen R eine Aufweitung der Dichtungsmembran (28) in einer radialen Richtung bewirkt ist, derart, dass der Dichtabschnitt (26) von der Dichtungsmembran (28) mit einer axial gerichteten Zugkraft F_{Z} beaufschlagt wird, die der Anpresskraft F_{A} entgegengerichtet ist,
**dadurch gekennzeichnet,**
**dass** der Dichtabschnitt (26) im Vergleich zur Dichtungsmembran (28) gegenüber den im Betriebseinsatz des Axial-Wellendichtrings (20) auftretenden Zentrifugalkräften F_{R} formstabil oder in seiner Form stabilisiert ist, wobei der Dichtabschnitt (26) des Axial-Wellendichtrings (20) durch einen Stützring (36) ausgesteift ist, um bei einer Rotationsbewegung des Axial-Wellendichtrings (20) um dessen Mittelachse (22) einem radialen Aufweiten des Dichtabschnitts (26) entgegenzuwirken.

2. Axial-Wellendichtring nach Anspruch 1, **dadurch gekennzeichnet, dass** die Raumstrukturbereiche R Falten (42) der Dichtungsmembran (28) umfassen.

3. Axial-Wellendichtring nach Anspruch 1, **dadurch gekennzeichnet, dass** die Raumstrukturbereiche R Vertiefungen (48) und/oder Ausbuchtungen der Dichtungsmembran (28) umfassen.

4. Axial-Wellendichtring nach Anspruch 3, **dadurch gekennzeichnet, dass** die Vertiefungen (48) zumindest teilweise eine polygonale oder eine elliptische, insbesondere ovale, oder eine kreisrunde Grundform ausweisen.

5. Axial-Wellendichtring nach einem der vorhergehenden Ansprüche, **dadurch gekennzeichnet, dass** der Stützring (36) den Dichtabschnitt (26) in einer radialen Richtung außenseitig umgreift.

6. Axial-Wellendichtring nach Anspruch 5, **dadurch gekennzeichnet, dass** der Dichtabschitt (26) und der Stützring (36) einstückig miteinander ausgebildet, miteinander verklebt oder als ein Mehrkomponentenspritzgussteil ausgebildet sind.

7. Axial-Wellendichtring nach Anspruch 5, **dadurch gekennzeichnet, dass** der Dichtabschnitt (26) im Stützring (36) geklemmt gehalten angeordnet ist.

8. Axial-Wellendichtring nach einem der vorhergehenden Ansprüche, **dadurch gekennzeichnet, dass** der Halteabschnitt (24), die Dichtungsmembran (28) sowie der Dichtabschnitt (26) miteinander einstückig ausgebildet sind.

9. Axial-Wellendichtring nach einem der vorhergehenden Ansprüche, **dadurch gekennzeichnet, dass** der Stützring (36) aus einem Kunststoffmaterial, aus Metall, aus Keramik oder aus einem Verbundmaterial besteht.

10. Axial-Wellendichtring nach einem der vorhergehenden Ansprüche, **dadurch gekennzeichnet, dass** die Dichtungsmembran (28), bevorzugt in radialer Richtung innenseitig, mit zumindest einem Masseelement (52), bevorzugt mit mehreren Masseelementen versehen ist, durch das/die das radiale Aufweiten der Dichtungsmembran (28) bei einer Rotationsbewegung des Wellendichtrings (20) unterstützt wird.

11. Axial-Wellendichtring nach einem der vorhergehenden Ansprüche, **dadurch gekennzeichnet, dass** der Halteabschnitt (24) einen Spann- oder Haltering (32) umfasst.

12. Axial-Wellendichtring nach einem der vorhergehenden Ansprüche, **dadurch gekennzeichnet, dass** der Dichtabschnitt (26) zumindest eine Dichtkante (26a) oder mehrere Dichtkanten (26a) aufweist.

13. Axial-Wellendichtring nach einem der vorhergehenden Ansprüche, **dadurch gekennzeichnet, dass** die Dichtungsmembran (28) aus einem zähelastischen oder aus einem gummielastisch verformbaren Material besteht.

14. Dichtungsanordnung umfassend ein Wellengehäuse (14) und eine Welle (12), die relativ zum Wellengehäuse (14) um eine Drehachse (16) rotierbar ist sowie ein Axial-Wellendichtring (20) nach einem der vorhergehenden Ansprüche 1 bis 13 zum Abdichten eines zwischen dem Wellengehäuse und der Welle ausgebildeten Dichtspalts (18), wobei der Axial-Wellendichtring (20) auf der Welle (12) drehfest montiert ist und mit seinem Dichtabschnitt (26) an einer Dichtfläche (30) des Wellengehäuses (14) in einer zur Mittelachse (22) des Wellendichtrings (20) axialen Richtung, dichtend anliegt.

15. Dichtungsanordnung nach Anspruch 14, **dadurch gekennzeichnet, dass** der Dichtungsmembran (28) eine Anschlagsfläche (38) zugeordnet ist, an der sich die Dichtungsmembran (28) des Wellendichtrings (20) bei Erreichen einer vorgegebenen Drehzahl der Welle (12) radial außenseitig abstützt.

## Claims

1. Axial shaft seal ring (20),
having a holding portion (24) which can be arranged in a statically sealing manner on a shaft (12) which can be rotated about an axis of rotation (16), and having a sealing portion (26) for dynamically sealing abutment against a sealing surface (30) in an axial direction to the central axis (22) of the axial shaft seal ring (20),
the holding portion (24) and the sealing portion (26) being connected to one another via an elastically deformable sealing membrane (28) which extends from the holding portion (24) in a radial direction towards the sealing portion (26) and by means of which the sealing portion can be pretensioned against the sealing surface (30) with a pressure force F_{A},
the sealing membrane (28) having a plurality of spatial structure regions R in the circumferential direction of the shaft seal ring (20), which regions serve as a circumferential reserve of the sealing membrane (28), an expansion of the sealing membrane (28) in a radial direction being effected in the spatial structure regions R by a centrifugal force F_{R}, which is accompanied by a rotational movement of the shaft seal ring (20) about the central axis (22) thereof and acts on the sealing membrane (28), in such a manner that the sealing portion (26) is acted upon with an axially directed pull force F_{Z} by the sealing membrane (28), which pull force is directed opposite to the pressure force F_{A}, **characterized in that**
the sealing portion (26) is dimensionally stable or stabilized in the shape thereof in comparison with the sealing membrane with respect to the centrifugal forces F_{R} occurring during the operational use of the axial shaft seal ring (20), the sealing portion (26) of the axial shaft seal ring (20) being stiffened by a support ring (36) in order to counteract a radial expansion of the sealing portion (26) during a rotational movement of the axial shaft seal ring (20) about the central axis (22) thereof.

2. Axial shaft seal ring according to claim 1, **characterized in that** the spatial structure regions R comprise folds (42) of the sealing membrane (28).

3. Axial shaft seal ring according to claim 1, **characterized in that** the spatial structure regions R comprise recesses (48) and/or bulges of the sealing membrane (28).

4. Axial shaft seal ring according to claim 3, **characterized in that** at least some of the recesses (48) have a polygonal or an elliptical, in particular oval, or a circular basic shape.

5. Axial shaft seal ring according to any of the preceding claims, **characterized in that** the support ring (36) surrounds the sealing portion (26) on the outside in a radial direction.

6. Axial shaft seal ring according to claim 5, **characterized in that** the sealing portion (26) and the support ring (36) are formed integrally with one another, bonded together or formed as a multi-component injection-molded part.

7. Axial shaft seal ring according to claim 5, **characterized in that** the sealing portion (26) is arranged so as to be clamped in the support ring (36).

8. Axial shaft seal ring according to any of the preceding claims, **characterized in that** the holding portion (24), the sealing membrane (28) and the sealing portion (26) are formed integrally with one another.

9. Axial shaft seal ring according to any of the preceding claims, **characterized in that** the support ring (36) is made of a plastics material, of metal, of ceramic or of a composite material.

10. Axial shaft seal ring according to any of the preceding claims, **characterized in that** the sealing membrane (28), preferably on the inside in the radial direction, is provided with at least one mass member (52), preferably with a plurality of mass members, by means of which the radial expansion of the sealing membrane (28) is assisted during a rotational movement of the shaft seal ring (20).

11. Axial shaft seal ring according to any of the preceding claims, **characterized in that** the holding portion (24) comprises a tensioning or holding ring (32).

12. Axial shaft seal ring according to any of the preceding claims, **characterized in that** the sealing portion (26) has at least one sealing edge (26a) or a plurality of sealing edges (26a).

13. Axial shaft seal ring according to any of the preceding claims, **characterized in that** the sealing membrane (28) consists of a viscoplastic or of a rubber-elastically deformable material.

14. Sealing arrangement comprising a shaft housing (14) and a shaft (12) which can be rotated relative to the shaft housing (14) about an axis of rotation (16), and an axial shaft seal ring (20) according to any of the preceding claims 1 to 13 for sealing a sealing gap (18) formed between the shaft housing and the shaft, wherein the axial shaft seal ring (20) is mounted non-rotatably on the shaft (12) and abuts sealingly with the sealing portion (26) thereof against a sealing surface (30) of the shaft housing (14) in an axial direction relative to the central axis (22) of the shaft seal ring (20).

15. Sealing arrangement according to claim 14, **characterized in that** the sealing membrane (28) is associated with a stop surface (38), on which the sealing membrane (28) of the shaft seal ring (20) is supported radially on the outside when the shaft (12) reaches a predetermined rotational speed.

## Revendications

1. Bague d'étanchéité d'arbre axiale (20),
comprenant une section de retenue (24), qui peut être agencée de manière statiquement étanche sur un arbre (12) pouvant tourner autour d'un axe de rotation (16), et
comprenant une section d'étanchéité (26) pour l'application dynamiquement étanche sur une surface d'étanchéité (30) dans une direction axiale par rapport à l'axe médian (22) de la bague d'étanchéité d'arbre axiale (20),
la section de retenue (24) et la section d'étanchéité (26) étant reliées entre elles par l'intermédiaire d'une membrane d'étanchéité (28) élastiquement déformable, qui s'étend depuis la section de retenue (24) dans une direction radiale jusqu'à la section d'étanchéité (26), et par laquelle la section d'étanchéité (26) peut être précontrainte avec une force de pression F_{A} contre la surface d'étanchéité (30),
la membrane d'étanchéité (28) présentant dans la direction circonférentielle de la bague d'étanchéité d'arbre (20) plusieurs zones de structure spatiale R, qui servent de réserve circonférentielle de la membrane d'étanchéité (28), un élargissement de la membrane d'étanchéité (28) dans une direction radiale étant provoqué dans les zones de structure spatiale R par une force centrifuge F_{R} accompagnant un mouvement de rotation de la bague d'étanchéité d'arbre (20) autour de son axe médian (22) et agissant sur la membrane d'étanchéité (28), de telle sorte que la section d'étanchéité (26) est sollicitée par la membrane d'étanchéité (28) avec une force de traction F_{Z} dirigée axialement, qui est opposée à la force de pression F_{A}**, caractérisée en ce que**
la section d'étanchéité (26) est de forme stable ou stabilisée dans sa forme en comparaison de la membrane d'étanchéité (28) vis-à-vis des forces centrifuges F_{R} apparaissant lors de l'utilisation en service de la bague d'étanchéité d'arbre axiale (20), la section d'étanchéité (26) de la bague d'étanchéité d'arbre axiale (20) étant renforcée par une bague de support (36), afin de contrer un élargissement radial de la section d'étanchéité (26) lors d'un mouvement de rotation de la bague d'étanchéité d'arbre axiale (20) autour de son axe médian (22).

2. Bague d'étanchéité d'arbre axiale selon la revendication 1, **caractérisée en ce que** les zones de structure spatiale R comprennent des plis (42) de la membrane d'étanchéité (28).

3. Bague d'étanchéité d'arbre axiale selon la revendication 1, **caractérisée en ce que** les zones de structure spatiale R comprennent des creux (48) et/ou des renflements de la membrane d'étanchéité (28).

4. Bague d'étanchéité d'arbre axiale selon la revendication 3, **caractérisée en ce que** les creux (48) présentent au moins partiellement une forme de base polygonale ou elliptique, en particulier ovale, ou circulaire.

5. Bague d'étanchéité d'arbre axiale selon l'une quelconque des revendications précédentes, **caractérisée en ce que** la bague de support (36) entoure extérieurement la section d'étanchéité (26) dans une direction radiale.

6. Bague d'étanchéité d'arbre axiale selon la revendication 5, **caractérisée en ce que** la section d'étanchéité (26) et la bague de support (36) sont configurées d'un seul tenant l'une avec l'autre, sont collées l'une avec l'autre ou sont configurées sous la forme d'une pièce moulée par injection à plusieurs composants.

7. Bague d'étanchéité d'arbre axiale selon la revendication 5, **caractérisée en ce que** la section d'étanchéité (26) est agencée de manière retenue par serrage dans la bague de support (36).

8. Bague d'étanchéité d'arbre axiale selon l'une quelconque des revendications précédentes, **caractérisée en ce que** la section de retenue (24), la membrane d'étanchéité (28) ainsi que la section d'étanchéité (26) sont configurées d'un seul tenant les unes avec les autres.

9. Bague d'étanchéité d'arbre axiale selon l'une quelconque des revendications précédentes, **caractérisée en ce que** la bague de support (36) est constituée d'une matière plastique, de métal, de céramique ou d'une matière composite.

10. Bague d'étanchéité d'arbre axiale selon l'une quelconque des revendications précédentes, **caractérisée en ce que** la membrane d'étanchéité (28) est pourvue, de préférence intérieurement dans la direction radiale, d'au moins un élément de masse (52), de préférence de plusieurs éléments de masse, par lequel/lesquels l'élargissement radial de la membrane d'étanchéité (28) est soutenu lors d'un mouvement de rotation de la bague d'étanchéité d'arbre (20) .

11. Bague d'étanchéité d'arbre axiale selon l'une quelconque des revendications précédentes, **caractérisée en ce que** la section de retenue (24) comprend une bague de serrage ou de retenue (32).

12. Bague d'étanchéité d'arbre axiale selon l'une quelconque des revendications précédentes, **caractérisée en ce que** la section d'étanchéité (26) présente au moins un bord d'étanchéité (26a) ou plusieurs bords d'étanchéité (26a).

13. Bague d'étanchéité d'arbre axiale selon l'une quelconque des revendications précédentes, **caractérisée en ce que** la membrane d'étanchéité (28) est constituée d'une matière viscoplastique ou d'une matière déformable avec l'élasticité du caoutchouc.

14. Agencement d'étanchéité comprenant un carter d'arbre (14) et un arbre (12) qui peut tourner par rapport au carter d'arbre (14) autour d'un axe de rotation (16), ainsi qu'une bague d'étanchéité d'arbre axiale (20) selon l'une quelconque des revendications 1 à 13 précédentes pour l'étanchéification d'un interstice d'étanchéité (18) formé entre le carter d'arbre et l'arbre, la bague d'étanchéité d'arbre axiale (20) étant montée de manière immobile en rotation sur l'arbre (12) et s'appliquant de manière étanche par sa section d'étanchéité (26) sur une surface d'étanchéité (30) du carter d'arbre (14) dans une direction axiale par rapport à l'axe médian (22) de la bague d'étanchéité d'arbre (20).

15. Dispositif d'étanchéité selon la revendication 14, **caractérisé en ce qu'**une surface de butée (38) est associée à la membrane d'étanchéité (28), sur laquelle la membrane d'étanchéité (28) de la bague d'étanchéité d'arbre (20) s'appuie radialement à l'extérieur lorsque l'arbre (12) atteint une vitesse de rotation prédéfinie.
